# EUROPEAN PATENT APPLICATION

(11) **EP 3 845 686 A1**
(43) Date of publication of application: **07.07.2021**
(21) Application number: 19878119.7
(22) Date of filing: 16.10.2019
(51) Int. Cl.: C23G 3/00, B01D 61/44, B01D 61/46, B01D 61/54, C23G 1/36

(54) **APPARATUS FOR TREATING ACIDIC TREATMENT SOLUTION, AND METHOD FOR TREATING ACIDIC TREATMENT SOLUTION**

(30) Priority: 31.10.2018 JP 2018205654
(71) Applicant: MITSUBISHI HEAVY INDUSTRIES, LTD., Chiyoda-ku, Tokyo 100-8332 (JP)
(72) Inventor: MIKAWA, Hiroaki, Tokyo 108-8215 (JP); MIYAZAKI, Taisuke, Tokyo 108-8215 (JP); IMASAKA, Koji, Tokyo 108-8215 (JP); SAKANISHI, Akihiro, Tokyo 108-8215 (JP); EGAWA, Kaoru, Tokyo 108-8215 (JP); NAGAI, Masahiko, Tokyo 108-8215 (JP)
(74) Representative: Hoffmann Eitle
(86) International application number: PCT/JP2019/040633
(87) International publication number: WO 2020/090468

(57) **Abstract**

In an acidic treatment liquid processing apparatus, a space between a first electrode and a second electrode spaced from each other is separated by a first diaphragm permeable and a second diaphragm into a first chamber, a second chamber, and a third chamber. While the first chamber is fed with an acidic treatment liquid containing a dichromate ion and a metal cation, the second chamber is fed with a first acid aqueous solution, and the third chamber is fed with a second acid aqueous solution, a voltage is applied using the first electrode as an anode and the second electrode as a cathode.

## Description

### TECHNICAL FIELD

The present invention relates to an acidic treatment liquid processing apparatus and an acidic treatment liquid processing method for processing an acidic treatment liquid containing a dichromate ion and a metal cation.

### BACKGROUND

Aluminum alloy, which is lightweight and excellent in strength, is used in industrial products such as aircrafts. In the manufacture stage of aircrafts, as a part of rust prevention treatment for components, surface treatment for removing stains and oxide films is performed using an acidic treatment liquid containing nitric acid or the like. The acidic treatment liquid may contain hexavalent chromium (dichromate ion) in order to improve the corrosion resistance.

The acidic treatment liquid is repeatedly used for surface treatment, for example, on the manufacturing line of the components, but impurities including metal components (aluminum, copper, etc.) derived from the aluminum alloy gradually accumulate in the acidic treatment liquid. When impurities contained in the acidic treatment liquid increases, treatment reaction is inhibited, or the impurities adhere to the components during surface treatment, which reduces the quality (corrosion resistance etc.) of surface treatment. Therefore, it is necessary to waste the acidic treatment liquid as industrial waste at a predetermined timing and newly prepare the acidic treatment liquid in the bath, which increases the environmental load and requires time and cost to replace the acidic treatment liquid.

On the other hand, as a method for removing copper ions from a copper etching solution containing an organic acid, a method using electrodialysis has been proposed (Patent Document 1).

### Citation List

### Patent Literature

Patent Document 1: JP2015-195376

### SUMMARY

### Problems to be Solved

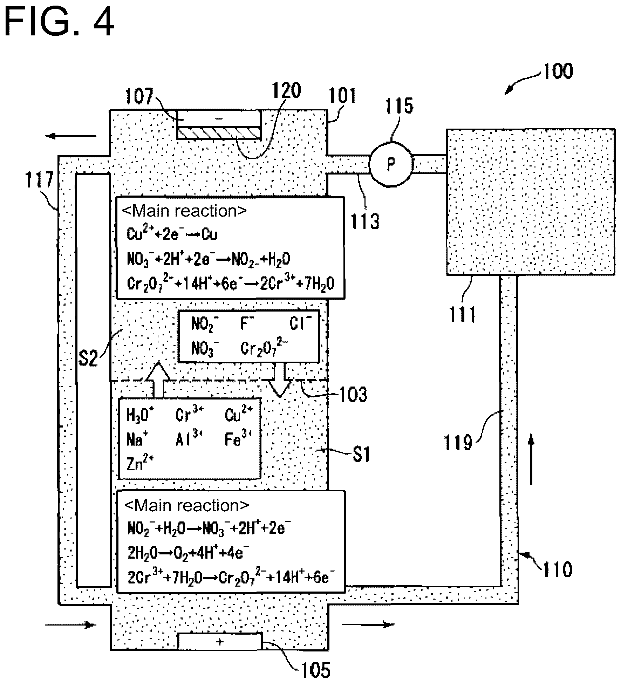

The present inventors have studied removing metal components from an acidic treatment liquid by an electrolytic precipitation method in order to prolong the life (reduce the frequency of replacement) of the acidic treatment liquid in which impurities are accumulated by the surface treatment. In the study, an acidic treatment liquid processing apparatus 100 as shown in FIG 4 was used.

The acidic treatment liquid processing apparatus 100 includes a tank 101 having an interior space, a diaphragm 103 dividing the interior space of the tank 101 into a first chamber S1 and a second chamber S2, an anode 105 disposed in the first chamber S1, a cathode 107 disposed in the second chamber S2, and a liquid passing part 110 configured to pass the acidic treatment liquid. The liquid passing part 110 includes a storage tank 111 for storing the acidic treatment liquid, a first pipe 113 connecting the storage tank 111 to the second chamber S2, a pump 115 disposed on the first pipe 113, a second pipe 117 connecting the second chamber S2 to the first chamber S1, and a third pipe 119 connecting the first chamber S1 to the storage tank 111. When the pump 115 is operated, the acidic treatment liquid circulates through the storage tank 111, the second chamber S2, and the first chamber S1 in this order.

In this acidic treatment liquid processing apparatus 100, titanium or platinum-plated titanium is used as the anode 105 and the cathode 107, and an acidic treatment liquid containing copper ions is stored in the storage tank 111. Then, the pump 115 is operated to circulate the acidic treatment liquid, and voltage is applied to the anode 105 and the cathode 107. As a result, as shown in FIG 4, cations such as copper ions move from the first chamber S1 to the second chamber S2 through the diaphragm 103. The copper ions in the second chamber S2 are reduced on the surface of the cathode 107 and precipitated on the surface of the cathode 107 to form a copper film 120. Thus, copper components are electrochemically removed from the acidic treatment liquid.

Here, since the anode 105 and the cathode 107 of the acidic treatment liquid processing apparatus 100 are in direct contact with the acidic treatment liquid which has strong acidity, deterioration progresses. Therefore, it is necessary to replace the anode 105 and the cathode 107 when the degree of deterioration reaches a certain level. Since the anode 105 and the cathode 107 use an expensive material such as titanium or platinum-plated titanium as described above, such measure affects the operating cost and the consumable cost. Further, when the anode 105 and the cathode 107 deteriorate, impurities such as exfoliated substances may be mixed with the acidic treatment liquid, which may cause troubles when the processed acidic treatment liquid is reused for surface treatment.

At least one embodiment of the present invention was made in view of the above circumstances, and an object thereof is to provide an acidic treatment liquid processing apparatus and an acidic treatment liquid processing method whereby it is possible to prolong the life and reduce the cost by suppressing the deterioration of the electrodes, and improve the quality of the processed acidic treatment liquid.

### Solution to the Problems

(1) To solve the above problem, an acidic treatment liquid processing apparatus according to at least one embodiment of the present invention comprises: a tank having an interior space; a first electrode and a second electrode disposed in the space so as to be spaced from each other; a power supply configured to apply a voltage while using the first electrode as an anode and the second electrode as a cathode; a first diaphragm permeable to a metal cation and separating a first chamber disposed between the first electrode and the second electrode from a second chamber disposed on a second electrode side of the first chamber in the space; a second diaphragm separating the first chamber from a third chamber disposed on a first electrode side of the first chamber in the space; a first liquid passing part configured to pass an acidic treatment liquid containing a dichromate ion and a metal cation into the first chamber; a second liquid passing part configured to pass a first acid aqueous solution into the second chamber; and a third liquid passing part configured to pass a second acid aqueous solution into the third chamber.
   With the above configuration (1), the interior space of the tank is divided by the first diaphragm and the second diaphragm into the first to third chambers. Since the first chamber fed with the acidic treatment liquid is separated from the second chamber and the third chamber by the first diaphragm and the second diaphragm, the first electrode and the second electrode are not directly immersed in the acidic treatment liquid. Thus, the life can be extended by suppressing the deterioration of the first electrode and the second electrode, and the cost can be reduced by reducing the replacement frequency. Further, since contamination of the acidic treatment liquid due to separation caused by the deterioration of the first electrode and the second electrode can be prevented, the deterioration of the quality of the processed acidic treatment liquid can be prevented.
(2) In some embodiments, in the above configuration (1), the acidic treatment liquid processing apparatus further comprises: a third diaphragm impermeable to a metal cation and separating the second chamber from a fourth chamber disposed on a second electrode side of the second chamber; and a fourth liquid passing part configured to pass a third acid aqueous solution into the fourth chamber.
   With the above configuration (2), since the fourth chamber is disposed on the second electrode side of the second chamber via the third diaphragm impermeable to a metal cation, metal cations transferred from the acidic treatment liquid fed into the first chamber do not permeate into the fourth chamber and remain in the second chamber. As a result, metal ions are prevented from precipitating on the second electrode, so that the operation of removing the precipitates on the second electrode can be eliminated.
(3) In some embodiments, in the above configuration (1) or (2), a plurality of processing units each of which includes the first chamber and the second chamber adjacent to each other via the first diaphragm are disposed between the first electrode and the second electrode with the second diaphragm being interposed between the processing units.
   With the above configuration (3), since the plurality of processing units are disposed between the first electrode and the second electrode, it is possible to increase the processing capacity of the acidic treatment liquid while reducing the areas of the first electrode and the second electrode. As a result, even when an expensive material is used for the first electrode and the second electrode, it is possible to realize a large-capacity processing apparatus while effectively reducing the apparatus cost.
(4) In some embodiments, in any one of the above configurations (1) to (3), the first diaphragm includes a cation exchange membrane.
   With the above configuration (4), it is possible to effectively prevent anions (nitrate ions, etc.) in the acid aqueous solution from being mixed in the acidic treatment liquid.
(5) In some embodiments, in the above configuration (4), the cation exchange membrane is a cation permselective membrane.
   With the above configuration (5), since a relatively inexpensive cation permselective membrane is used as the cation exchange membrane, it is possible to more effectively reduce the cost. For example, the cation exchange membrane is a polyvalent cation exchange membrane capable of exchanging polyvalent cations such as copper ions (divalent).
(6) In some embodiments, in any one of the above configurations (1) to (5), the second diaphragm includes a bipolar membrane or a monovalent cation permselective membrane.
   With the above configuration (6), since the bipolar membrane or the monovalent cation permselective membrane is used as the second diaphragm separating the first chamber from the third chamber, the acidic treatment liquid can be isolated from the first electrode while suppressing the movement of anions (dichromate ion, nitrate ion, etc.) in the acidic treatment liquid in the first chamber toward the third chamber.
(7) In some embodiments, in the above configuration (6), the bipolar membrane includes an anion exchange layer facing the first electrode and a cation exchange layer facing the second electrode.
   With the above configuration (7), since the cation exchange layer constituting the anion exchange layer has weaker corrosion resistance than the cation exchange membrane, by arranging the cation exchange layer on the side in contact with the acidic treatment liquid, it is possible to maintain a stable processing performance for a long time.
(8) In some embodiments, in the above configuration (2), the acidic treatment liquid processing apparatus comprises: an acid concentration detection part configured to detect an acid concentration of the fourth chamber; and an acid aqueous solution supply part configured to additionally supply an acid aqueous solution to the fourth chamber, based on a detection result of the acid concentration detection part.
   With the above configuration (8), the acid aqueous solution is additionally supplied to the fourth chamber based on the acid concentration of the acid aqueous solution in the fourth chamber. As a result, the acid concentration of the acid aqueous solution circulating in the fourth chamber is maintained in an appropriate concentration range, so that it is possible to maintain a suitable processing performance for a long time.
(9) In some embodiments, in the above configuration (2), the fourth acid aqueous solution is sulfuric acid.
   With the above configuration (9), sulfuric acid is used as the fourth acid aqueous solution. Sulfuric acid is hardly consumed by the reduction reaction at the second electrode, which is the cathode. Therefore, it is less consumed than an acid aqueous solution such as nitric acid, which is consumed by the reduction reaction at the cathode, so that it is possible to maintain a stable processing performance for a long time.
(10) To solve the above problem, an acidic treatment liquid processing method according to at least one embodiment of the present invention comprises: separating a space between a first electrode and a second electrode spaced from each other by a first diaphragm permeable to a metal cation into a first chamber and a second chamber disposed on a second electrode side of the first chamber, and separating the first chamber by a second diaphragm from a third chamber disposed on a first electrode side of the first chamber; passing an acidic treatment liquid containing a dichromate ion and a metal cation into the first chamber; passing a first acid aqueous solution into the second chamber; passing a second acid aqueous solution into the third chamber; and applying a voltage while using the first electrode as an anode and the second electrode as a cathode. The first diaphragm is permeable to a metal cation.
   With the above method (10), the interior space of the tank is divided by the first diaphragm and the second diaphragm into the first to third chambers. Since the first chamber fed with the acidic treatment liquid is separated from the second chamber and the third chamber by the first diaphragm and the second diaphragm, the first electrode and the second electrode are not directly immersed in the acidic treatment liquid. Thus, the life can be extended by suppressing the deterioration of the first electrode and the second electrode, and the cost can be reduced by reducing the replacement frequency. Further, since contamination of the acidic treatment liquid due to separation caused by the deterioration of the first electrode and the second electrode can be prevented, the deterioration of the quality of the processed acidic treatment liquid can be prevented.
(11) In some embodiments, in the above method (10), the acidic treatment liquid processing method further comprises: separating the space by a third diaphragm into the second chamber and a fourth chamber disposed on a second electrode side of the second chamber; and passing a third acid aqueous solution into the fourth chamber.
   With the above method (11), since the fourth chamber is disposed on the second electrode side of the second chamber via the third diaphragm impermeable to a metal cation, metal cations transferred from the acidic treatment liquid fed into the first chamber do not permeate into the fourth chamber and remain in the second chamber. As a result, metal ions are prevented from precipitating on the second electrode, so that the operation of removing the precipitates on the second electrode can be eliminated.
(12) In some embodiments, in the above method (11), the acidic treatment liquid processing method further comprises: detecting an acid concentration of the fourth chamber; and additionally supplying an acid aqueous solution to the fourth chamber, based on a detection result of the acid concentration.

With the above method (12), the acid aqueous solution is additionally supplied to the fourth chamber based on the acid concentration of the acid aqueous solution in the fifth chamber. As a result, the acid concentration of the acid aqueous solution circulating in the fourth chamber is maintained in an appropriate concentration range, so that it is possible to maintain a suitable processing performance for a long time.

### Advantageous Effects

At least one embodiment of the present invention provides an acidic treatment liquid processing apparatus and an acidic treatment liquid processing method whereby it is possible to prolong the life and reduce the cost by suppressing the deterioration of the electrodes, and improve the quality of the processed acidic treatment liquid.

### BRIEF DESCRIPTION OF DRAWINGS

FIG 1 is a schematic configuration diagram of an acidic treatment liquid processing apparatus according to a first embodiment.
FIG 2 is a schematic configuration diagram of an acidic treatment liquid processing apparatus according to a second embodiment.
FIG 3 is a schematic configuration diagram of an acidic treatment liquid processing apparatus according to a third embodiment.
FIG 4 is a schematic configuration diagram of an acidic treatment liquid processing apparatus using an electrolytic precipitation method.

### DETAILED DESCRIPTION

Embodiments of the present invention will now be described in detail with reference to the accompanying drawings. It is intended, however, that unless particularly identified, dimensions, materials, shapes, relative positions, and the like of components described in the embodiments shall be interpreted as illustrative only and not intended to limit the scope of the present invention.

### (First Embodiment)

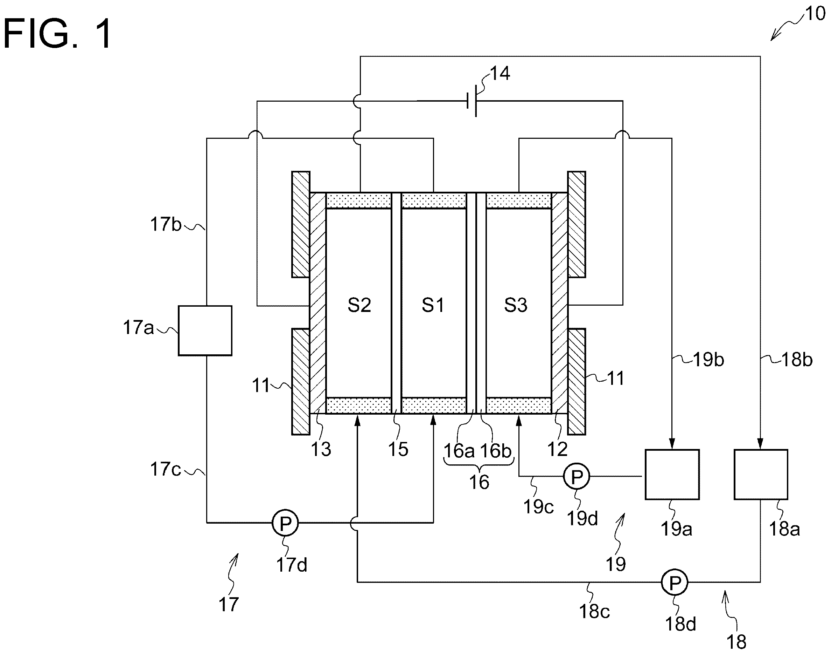

FIG 1 is a schematic configuration diagram of an acidic treatment liquid processing apparatus 10 according to the first embodiment.

The acidic treatment liquid processing apparatus 10 includes a tank 11, a first electrode 12, a second electrode 13, a power supply 14, a first diaphragm 15, a second diaphragm 16, a first liquid passing part 17, a second liquid passing part 18, and a third liquid passing part 19.

The tank 11 has an interior space. In the space, the first electrode 12 and the second electrode 13 are disposed so as to be spaced from each other. The power supply 14 is a DC power supply, and is configured to apply a voltage using the first electrode 12 as an anode and the second electrode 13 as a cathode.

Examples of the material of the first electrode 12 include Pt, Pt-plated Ti, PbO2-coated Ti, Ti, and IrO₂-coated Ti. Examples of the material of the second electrode 13 include Pt, Pt-plated Ti, and Ti. The distance between the first electrode 12 and the second electrode 13 may be, for example, 100 cm or less.

The interior space of the tank 11 is divided by the first diaphragm 15 and the second diaphragm 16 into a first chamber S1, a second chamber S2, and a third chamber S3. The first diaphragm 15 separates the first chamber S1 from the second chamber S2 disposed on the second electrode 13 side of the first chamber S1 in the interior space of the tank 11. The second diaphragm 16 separates the first chamber S1 from the third chamber S3 disposed on the first electrode 12 side of the first chamber S1 in the interior space of the tank 11. The first electrode 12 is disposed in the third chamber S3, and the second electrode 13 is disposed in the second chamber S2.

The first liquid passing part 17 includes an acidic treatment liquid storage tank 17a for storing the acidic treatment liquid, a first pipe 17b connected at one end to the downstream side of the tank 11 (position corresponding to first chamber S 1) and connected at the other end to the upstream side of the acidic treatment liquid storage tank 17a, a second pipe 17c connected at one end to the downstream side of the acidic treatment liquid storage tank 17a and connected at the other end to the upstream side of the tank 11 (position corresponding to first chamber S1), and a pump 17d disposed on the second pipe 17c. When the pump 17d is operated, the acidic treatment liquid is fed into the first chamber S 1.

During operation of the pump 17d, the acidic treatment liquid circulates in the direction of arrow in FIG 1, i.e., through the acidic treatment liquid storage tank 17a, the second pipe 17c, the first chamber S1, and the first pipe 17b in this order.

The acidic treatment liquid contains dichromate ions and metal cations. The acidic treatment liquid is typically an acidic treatment liquid after being used for surface treatment of a metallic material. The metallic material indicates metal or alloy. Examples of the metallic material include aluminum, aluminum alloy, titanium, titanium alloy, stainless steel, and copper alloy. Examples of the aluminum alloy include alloys containing one or more of Cu, Fe, Zn, Mn, Mg, Cr, Ti, and Si as a component. The metallic material is preferably aluminum or aluminum alloy, particularly preferably aluminum alloy.

The acidic treatment liquid before being used for surface treatment of a metallic material contains dichromate ions. It also typically contains nitric acid in addition to dichromate ions. When the dichromate ions are derived from a metal salt of dichromic acid, metal cations corresponding to this metal salt are contained. Cr³⁺ produced by the reduction of dichromate ions may also be contained. In addition, if necessary, hydrofluoric acid, hydrofluoric acid salt, surfactant, chelating agent may be further contained.

When surface treatment of a metallic material is performed using such an acidic treatment liquid, metal components in the metallic material are eluted into the acidic treatment liquid. As the surface treatment using the acidic treatment liquid is repeated, metal cations accumulate in the acidic treatment liquid. Accordingly, the acidic treatment liquid after being used for surface treatment of a metallic material contains metal cations derived from the metallic material in addition to components (dichromate ions, etc.) contained in the acidic treatment liquid before being used for surface treatment. Illustrative examples of the metal cation in the acidic treatment liquid include Na⁺, K⁺, Cu²⁺, Zn²⁺, Mg²⁺, Ca²⁺, Mn²⁺, Co²⁺, Ni²⁺, Cr³⁺, Al³⁺, Fe³⁺, Pb³⁺, and Ti³⁺.

The nitric acid concentration of the acidic treatment liquid may be, for example, 1 to 50% by mass. The dichromate ion concentration of the acidic treatment liquid may be, for example, 0.01 to 10% by mass. The metal cation concentration of the acidic treatment liquid may be, for example, more than 0% by mass and 10% by mass or less. The pH of the acidic treatment liquid may be, for example, 6 or less at 25°C.

The second liquid passing part 18 includes a first acid aqueous solution storage tank 18a for storing a first acid aqueous solution, a third pipe 18b connected at one end to the downstream side of the tank 11 (position corresponding to second chamber S2) and connected at the other end to the first acid aqueous solution storage tank 18a, a fourth pipe 18c connected at one end to the first acid aqueous solution storage tank 18a and connected at the other end to the upstream side of the tank 11, and a pump 18d disposed on the fourth pipe 18c. When the pump 18d is operated, the first acid aqueous solution is fed into the second chamber S2.

During operation of the pump 18d, the first acid aqueous solution circulates in the direction of arrow in FIG 1, i.e., through the first acid aqueous solution storage tank 18a, the fourth pipe 18c, the second chamber S2, and the third pipe 18b in this order.

The acid in the first acid aqueous solution functions as supply source of hydrogen ions which exchange electrons at the second electrode 13. Examples of the acid include nitric acid, sulfuric acid, and hydrochloric acid.

During processing of the acidic treatment liquid, the first diaphragm 15 may break. At this time, if acid not contained in the acidic treatment liquid is mixed from the first acid aqueous solution, the acidic treatment liquid reused for surface treatment of a metallic material may adversely affect the surface treatment quality. Therefore, the acid in the first acid aqueous solution is preferably the same acid as that contained in the acidic treatment liquid. When the acidic treatment liquid contains nitric acid, the acid in the first acid aqueous solution is preferably nitric acid.

The acid concentration of the first acid aqueous solution may be, for example, 1 to 50% by mass. The pH of the first acid aqueous solution may be, for example, 6 or less at 25°C.

In the case where sulfuric acid is used as acid in the first acid aqueous solution, the sulfuric acid is hardly consumed by the reduction reaction at the second electrode 13, which is the cathode. Therefore, it is less consumed than an acid aqueous solution such as nitric acid, which is consumed by the reduction reaction at the second electrode 13, so that it is possible to maintain a stable processing performance for a long time.

The third liquid passing part 19 includes a second acid aqueous solution storage tank 19a for storing a second acid aqueous solution, a fifth pipe 19b connected at one end to the downstream side of the tank 11 (position corresponding to third chamber S3) and connected at the other end to the second acid aqueous solution storage tank 19a, a sixth pipe 19c connected at one end to the second acid aqueous solution storage tank 19a and connected at the other end to the upstream side of the tank 11, and a pump 19d disposed on the sixth pipe 19c. When the pump 19d is operated, the second acid aqueous solution is fed into the third chamber S3.

During operation of the pump 19d, the first acid aqueous solution circulates in the direction of arrow in FIG 1, i.e., through the second acid aqueous solution storage tank 19a, the sixth pipe 19c, the third chamber S3, and the fifth pipe 19b in this order.

Examples of the acid in the second acid aqueous solution include nitric acid, sulfuric acid, and hydrochloric acid.

During processing of the acidic treatment liquid, the second diaphragm 16 may break. At this time, if acid not contained in the acidic treatment liquid is mixed from the second acid aqueous solution, the acidic treatment liquid reused for surface treatment of a metallic material may adversely affect the surface treatment quality. Therefore, the acid in the second acid aqueous solution is preferably the same acid as that contained in the acidic treatment liquid. When the acidic treatment liquid contains nitric acid, the acid in the second acid aqueous solution is preferably nitric acid.

The acid concentration of the second acid aqueous solution may be, for example, 1 to 50% by mass. The pH of the second acid aqueous solution may be, for example, 6 or less at 25°C.

When the first acid aqueous solution and the second acid aqueous solution have the same composition, the second liquid passing part 18 and the third liquid passing part 19 may be integrally formed to simplify the apparatus configuration.

The first diaphragm 15 is a membrane permeable to at least metal cations. Therefore, when a voltage is applied using the first electrode 12 as the anode and the second electrode 13 as the cathode, metal cations in the acidic treatment liquid in the first chamber S1 can move to the acid aqueous solution in the second chamber S2 through the first diaphragm 15.

Examples of the first diaphragm 15 include porous membranes such as an electrolytic membrane, an unglazed plate, a cation exchange membrane, and a bipolar membrane. The electrolytic membrane desirably includes fluororesin. Examples of the fluororesin include polytetrafluoroethylene (tetrafluoroethylene; PTFE), a partially fluorinated olefin resin, and a fluorinated olefin copolymer. Examples of the partially fluorinated olefin resin include polychlorotrifluoroethylene (trifluorinated resin; PCTFE or CTFE), polyvinylidene fluoride (PVDF), and polyvinyl fluoride (PVF). Examples of the fluorinated olefin copolymer include perfluoroalkoxy alkane (PFA), ethylene tetrafluoride-propylene hexafluoride copolymer (FEP), ethylene-ethylene tetrafluoride copolymer (ETFE), and ethylene-chlorotrifluoroethylene copolymer (ECTFE). The bipolar membrane is an ion exchange membrane having a structure in which an anion exchange layer and a cation exchange layer are laminated. Examples of the cation exchange resin constituting the cation exchange membrane or the cation exchange layer include resins having a functional group such as a sulfo group and a carboxyl group. Examples of the anion exchange resin constituting the anion exchange layer include resins having a quaternary ammonium group or a primary to tertiary amino group.

The electrolytic membrane and the unglazed plate are permeable to both cations and anions. Therefore, in the case where the electrolytic membrane or the unglazed plate is used as the first diaphragm 15, when a voltage is applied to the first electrode 12 which is the anode and the second electrode 13 which is the cathode, cations in the acidic treatment liquid in the first chamber S1 move to the first acid aqueous solution in the second chamber S2 through the first diaphragm 15, and anions in the first acid aqueous solution in the second chamber S2 move to the acidic treatment liquid in the first chamber S1 through the first diaphragm 15.

The cation exchange membrane is permeable to cations but impermeable to anions. Therefore, when a voltage is applied to the first electrode 12 which is the anode and the second electrode 13 which is the cathode, cations in the acidic treatment liquid in the first chamber S1 move to the acid aqueous solution in the second chamber S2 through the first diaphragm 15. However, anions in the first acid aqueous solution in the second chamber S2 do not permeate the first diaphragm 15 but remain in the first acid aqueous solution.

The first diaphragm 15 is preferably a cation exchange membrane. When the first diaphragm 15 is a cation exchange membrane, it is possible to suppress the movement of anions from the second electrode 13 side (first acid aqueous solution) to the first electrode 12 side (acidic treatment liquid) of the first diaphragm 15. When anions (NO₂⁻, NO₃⁻, etc.) in the first acid aqueous solution move to the acidic treatment liquid, the concentration and composition of acid in the acidic treatment liquid change. When this acidic treatment liquid is reused for surface treatment of a metallic material, the surface treatment quality may fluctuate. Further, the acidic treatment liquid may contain anions such as F⁻ as a component for surface treatment, and when the anion concentration in the acidic treatment liquid decreases, and this acidic treatment liquid is reused for surface treatment of a metallic material, the surface treatment quality may fluctuate. When the first diaphragm 15 is the cation exchange membrane, it is possible to suppress such movement of anions, and suppress the fluctuation of the surface treatment quality.

The electrical resistance of the first diaphragm 15 may be, for example, 100 Ω·dm² or less. The thickness of the first diaphragm 15 may be, for example, 1 to 10000 µm.

The second diaphragm 16 is interposed between the first chamber S1 and the third chamber S3 to prevent the acidic treatment liquid in the first chamber S1 from coming into contact with the first electrode 12 in the third chamber S3. Since the acidic treatment liquid is a strongly acidic liquid containing dichromate ions, if the first electrode 12 is directly immersed therein, the electrode may deteriorate. Since the first electrode 12 is composed of a relatively expensive material such as Pt, Pt-plated Ti, PbO₂-coated Ti, Ti, and IrO2-coated Ti as described above, the cost increases as the replacement frequency increases with the progress of deterioration. In this embodiment, since the second diaphragm 16 is interposed between the first electrode 12 and the first chamber S1 fed with the acidic treatment liquid to form the third chamber S3, the first electrode 12 is not directly immersed in the acidic treatment liquid in the first chamber S1. As a result, the deterioration of the first electrode 12 is suppressed, and the life of the first electrode 12 can be extended. Further, when the deterioration of the first electrode 12 progresses, exfoliated substances from the first electrode 12 may be mixed in the processed acidic treatment liquid, which may cause a trouble when the acidic treatment liquid is reused. However, such a reuse trouble can be effectively avoided by suppressing the deterioration of the first electrode 12.

The second diaphragm 16 may be a bipolar membrane. The bipolar membrane is an ion exchange membrane having a structure in which a cation exchange layer 16a and an anion exchange layer 16b are laminated. Examples of the cation exchange resin constituting the cation exchange layer 16a include resins having a functional group such as a sulfo group and a carboxyl group. Examples of the anion exchange resin constituting the anion exchange layer 16b include resins having a quaternary ammonium group or a primary to tertiary amino group.

In the case where the bipolar membrane is used as the second diaphragm 16, as shown in FIG 1, the anion exchange layer 16b may be arranged on the side facing the first electrode 12, and the cation exchange layer 16a may be arranged on the side facing the second electrode 13. Since the anion exchange layer 16b constituting the bipolar membrane has weaker corrosion resistance than the cation exchange layer 16a, by arranging the cation exchange layer 16a on the side in contact with the acidic treatment liquid, it is possible to maintain a stable processing performance for a long time.

Alternatively, the second diaphragm 16 may be a monovalent cation permselective membrane selectively permeable to monovalent cations. Since the monovalent cation permselective membrane is inexpensive compared with the bipolar membrane, it is effective for reducing the apparatus cost.

The electrical resistance of the second diaphragm 16 may be, for example, 100 Ω·dm² or less. The thickness of the second diaphragm 16 may be, for example, 1 to 10000 µm.

The acidic treatment liquid processing apparatus 10 is used for processing the acidic treatment liquid containing dichromate ions and metal cations. Specifically, the apparatus is used for removing metal cations from the acidic treatment liquid. An example of the acidic treatment liquid processing method using the acidic treatment liquid processing apparatus 10 will now be described with reference to FIG 1. In this example, the acidic treatment liquid containing nitric acid, dichromate ions, and metal cations Cr³⁺, Cu²⁺, Na⁺, Al³⁺, Fe³⁺, Zn²⁺ is processed using nitric acid aqueous solution as the first acid aqueous solution and the second acid aqueous solution.

In the acidic treatment liquid processing apparatus 10, the pump 17d is operated to feed the acidic treatment liquid into the first chamber S1, the pump 18d is operated to feed the acid aqueous solution into the second chamber S2, and the pump 19d is operated to feed the acidic treatment liquid into the third chamber S3. While the first chamber S1 is filled with the acidic treatment liquid, the second chamber S2 is filled with the first acid aqueous solution, and the third chamber S3 is filled with the second acid aqueous solution, a voltage is applied by the power supply 14 using the first electrode 12 as the anode and the second electrode 13 as the cathode.

At this time, as shown in FIG 1, the following reactions 1-1 and 1-2 mainly proceed at the first electrode 12, and the following reactions 2-1 and 2-2 mainly proceed at the second electrode 13. Further, cations (H₃O⁺, Cr³⁺, Cu²⁺, Na⁺, Al³⁺, Fe³⁺, Zn²⁺) in the acidic treatment liquid are attracted to the second electrode 13 through the first diaphragm 15, and move to the first acid aqueous solution. In the case where the first diaphragm 15 and the second diaphragm 16 are also permeable to anions, anions (NO₂⁻, NO₃⁻) in the acid aqueous solution are attracted to the first electrode 12, permeate the first diaphragm 15 and the second diaphragm 16, and move to the second acid aqueous solution through the acidic treatment liquid.

Reaction 1-1: NO₂⁻ + H₂O → NO₃⁻ + 2H⁺ + 2e⁻

Reaction 1-2: 2H₂O → O₂ + 4H⁺ + 4e⁻

Reaction 2-1: NO₃ + 2H⁺ + 2e⁻ → NO₂⁻ + H₂O

Reaction 2-2: 2H⁺ + 2e⁻ → H₂

In the processing, the amount of the acidic treatment liquid fed into the first chamber S1 may be, for example, 100 t/hr or less. The temperature of the acidic treatment liquid may be, for example, 1 to 80°C. The amount of the first acid aqueous solution fed into the second chamber S2 may be, for example, 100 t/hr or less. The temperature of the first acid aqueous solution may be, for example, 1 to 80°C. The amount of the second acid aqueous solution fed into the third chamber S3 may be, for example, 100 t/hr or less. The temperature of the second acid aqueous solution may be, for example, 1 to 80°C. The voltage applied by the power supply 14 may be, for example, more than 0 V and 1000 V or less. The current density may be, for example, more than 0 A/dm² and 100 A/dm² or less.

With the acidic treatment liquid processing method according to the present embodiment, as metal cations in the acidic treatment liquid permeate the first diaphragm 15 and move to the first acid aqueous solution, the metal cations are removed from the acidic treatment liquid. On the other hand, dichromate ions, which are anions, in the acidic treatment liquid are attracted to the first electrode 12, but they remain in the acidic treatment liquid by the second diaphragm 16 composed of the bipolar membrane or the monovalent cation permselective membrane.

Further, the acidic treatment liquid does not come into contact with not only the first electrode 12 which is the anode but also the second electrode 13 which is the cathode. Thus, it is possible to suppress a side reaction in which dichromate ions (hexavalent chromium) in the acidic treatment liquid are reduced. Similarly, it is possible to suppress a side reaction in which nitric acid (NO₃⁻) in the acidic treatment liquid is reduced. As a result, it is possible to remove metal cations in the acidic treatment liquid without reducing hexavalent chromium and nitric acid. In addition, it is possible to further remove metal cations, such as aluminum ions, which cannot be removed by the electrolytic precipitation method.

The acidic treatment liquid from which metal cations are removed as described above can be reused for surface treatment without wasting the liquid. Further, in the reuse, since the metal cation concentration can be maintained low, the risk of mixing metal cations due to surface treatment can be reduced, and metal can be recovered at high purity.

In particular, when nitric acid which is the same as acid contained in the acidic treatment liquid is selected as acid of the acid aqueous solution and the second acid aqueous solution, while supplying hydrogen ions which exchange electrons, it is possible to prevent the acidic treatment liquid from being mixed with foreign acids and affecting the surface treatment quality even if the first diaphragm 15 or the second diaphragm 16 breaks. When the cation exchange membrane is selected as the first diaphragm 15, it is possible to prevent nitric acid in the first acid aqueous solution from being mixed into the acidic treatment liquid and fluctuating the nitric acid concentration in the acidic treatment liquid.

During the processing of the acidic treatment liquid, water (H₃O⁺ or H⁺·nH₂O) moves from the acidic treatment liquid to the first acid aqueous solution on the cathode side. Therefore, the increased water may be removed from the first acid aqueous solution during or after the processing of the acid treatment liquid. This makes it possible to suppress an increase in the amount of liquid and continue using the first acid aqueous solution. The water may be removed by a general heat concentration method, or by heating evaporation with sunlight or air drying.

### (Second Embodiment)

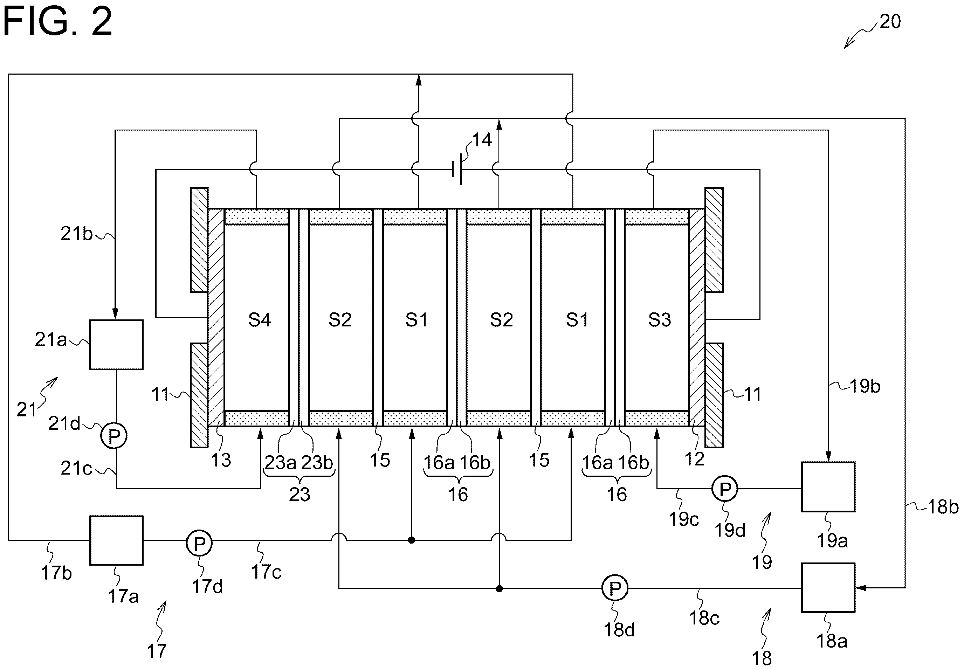

Next, an acidic treatment liquid processing apparatus 20 according to the second embodiment will be described. FIG. 2 is a schematic configuration diagram of an acidic treatment liquid processing apparatus 20 according to the second embodiment.

In the following description, the same features in the above embodiment are associated with the same reference numerals, and not described again.

In the acidic treatment liquid processing apparatus 20, a plurality of processing units each of which includes the first chamber S1 and the second chamber S2 adjacent to each other are disposed between the first electrode 12 and the second electrode 13. In the example of FIG 2, two processing units, namely, a first processing unit U1 and a second processing unit U2 are disposed between the first electrode 12 and the second electrode 13.

In each of the first processing unit U1 and the second processing unit U2, the first chamber S1 and the second chamber S2 are arranged as a pair with the first diaphragm 15 therebetween. The second chamber S2 of the first processing unit U1 and first chamber S1 of the second processing unit U2 are arranged with the second diaphragm 16 therebetween. The first chamber S1 and the second chamber S2 of each processing unit are fed with the acidic treatment liquid and the first acid aqueous solution by the first liquid passing part 17 and the second liquid passing part 18, respectively.

The first chamber S1 of the processing unit U1 closest to the first electrode 12 among the plurality of processing units is arranged adjacent to the third chamber S3 which includes the first electrode 12 with the second diaphragm 16 therebetween. The third chamber S3 is fed with the second acid aqueous solution by the third liquid passing part 19. As described above, also in the second embodiment, since the first electrode 12 is isolated from the acidic treatment liquid fed into the first chamber S1 by the second diaphragm 16, the deterioration of the first electrode 12 can be suppressed, and the life can be extended.

The second chamber S2 of the processing unit U2 closest to the second electrode 13 among the plurality of processing units is arranged adjacent to a fourth chamber S4 which includes the second electrode 13 with a third diaphragm 23 therebetween. The fourth chamber S4 is fed with a third acid aqueous solution by a fourth liquid passing part 21.

The fourth liquid passing part 21 includes an acid aqueous solution storage tank 21a for storing the third acid aqueous solution, a seventh pipe 21b connected at one end to the downstream side of the tank 11 (position corresponding to fourth chamber S4) and connected at the other end to the acid aqueous solution storage tank 21a, an eighth pipe 21c connected at one end to the acid aqueous solution storage tank 21a and connected at the other end to the upstream side of the tank 11, and a pump 21d disposed on the eighth pipe 21c. When the pump 21d is operated, the third acid aqueous solution is fed into the fourth chamber S4.

During operation of the pump 21d, the first acid aqueous solution circulates in the direction of arrow in FIG. 2, i.e., through the acid aqueous solution storage tank 21a, the eighth pipe 21c, the fourth chamber S4, and the seventh pipe 21b in this order.

Examples of the acid in the third acid aqueous solution include nitric acid, sulfuric acid, and hydrochloric acid. The acid concentration of the third acid aqueous solution may be, for example, 1 to 50% by mass. The pH of the third acid aqueous solution may be, for example, 6 or less at 25°C.

The third diaphragm 23 is interposed between the second chamber S2 of the second processing unit U2 and the fourth chamber S4 to prevent metal cations transferred from the acidic treatment liquid in the first chamber S1 from precipitating on the second electrode 13 disposed in the fourth chamber S4. As a result, it is possible to maintain the quality of the second electrode 13 well for a long time.

The third diaphragm 23 may be a bipolar membrane. The bipolar membrane is an ion exchange membrane having a structure in which a cation exchange layer 23a and an anion exchange layer 23b are laminated. Examples of the cation exchange resin constituting the cation exchange layer 23a include resins having a functional group such as a sulfo group and a carboxyl group. Examples of the anion exchange resin constituting the anion exchange layer 23b include resins having a quaternary ammonium group or a primary to tertiary amino group.

Alternatively, the third diaphragm 23 may be a monovalent cation permselective membrane selectively permeable to monovalent cations. Since the monovalent cation permselective membrane is inexpensive compared with the bipolar membrane, it is effective for reducing the apparatus cost.

The electrical resistance of the third diaphragm 23 may be, for example, 100 Ω·dm² or less. The thickness of the third diaphragm 23 may be, for example, 1 to 10000 µm.

In the acidic treatment liquid processing apparatus 20, since the plurality of processing units U1, U2 are disposed between the first electrode 12 and the second electrode 13, it is possible to increase the processing capacity of the acidic treatment liquid while reducing the areas of the first electrode 12 and the second electrode 13. Further, since the areas of the first electrode 12 and the second electrode 13 are reduced, even if the number of processing units is increased, the current capacity can be kept relatively small, the size of the power supply 14 can be minimized, and the power cost can be reduced. Further, even if multiple processing units are provided, since the apparatus configuration is compact, the apparatus can be accommodated in a limited installation space, and the number of components such as power cables can be reduced. This is also cost effective.

### <Third Embodiment>

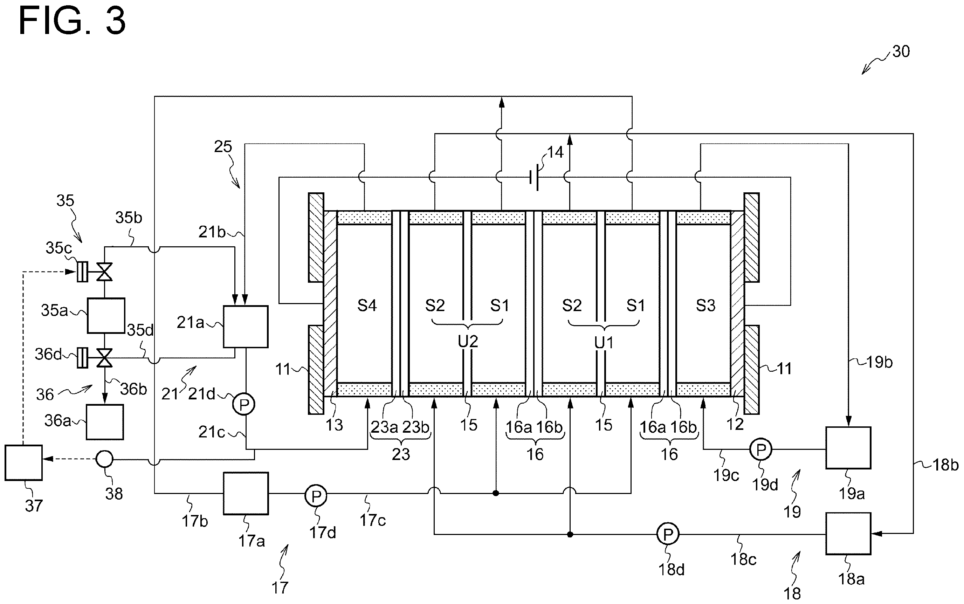

Next, an acidic treatment liquid processing apparatus 30 according to the third embodiment will be described. FIG 3 is a schematic configuration diagram of an acidic treatment liquid processing apparatus 30 according to the third embodiment.

In the following description, the same features in the above embodiment are associated with the same reference numerals, and not described again.

In the acidic treatment liquid processing apparatus 30, as with the acidic treatment liquid processing apparatus 20, a plurality of processing units each of which includes the first chamber S1 and the second chamber S2 adjacent to each other are disposed between the first electrode 12 and the second electrode 13. In the example of FIG 3, two processing units, namely, a first processing unit U1 and a second processing unit U2 are disposed between the first electrode 12 and the second electrode 13.

In each of the first processing unit U1 and the second processing unit U2, the first chamber S1 and the second chamber S2 are arranged as a pair with the first diaphragm 15 therebetween. The second chamber S2 of the first processing unit U1 and first chamber S1 of the second processing unit U2 are arranged with the second diaphragm 16 therebetween. The first chamber S1 and the second chamber S2 of each processing unit are fed with the acidic treatment liquid and the first acid aqueous solution by the first liquid passing part 17 and the second liquid passing part 18, respectively.

The first chamber S1 of the processing unit U1 closest to the first electrode 12 among the plurality of processing units is arranged adjacent to the third chamber S3 which includes the first electrode 12 with the second diaphragm 16 therebetween. The third chamber S3 is fed with the second acid aqueous solution by the third liquid passing part 19. As described above, also in the third embodiment, since the first electrode 12 is isolated from the acidic treatment liquid fed into the first chamber S1 by the second diaphragm 16, the deterioration of the first electrode 12 can be suppressed, and the life can be extended.

The second chamber S2 of the processing unit U2 closest to the second electrode 13 among the plurality of processing units is arranged adjacent to a fourth chamber S4 which includes the second electrode 13 with a third diaphragm 23 therebetween. The fourth chamber S4 is fed with a third acid aqueous solution by a fourth liquid passing part 21.

The fourth liquid passing part 21 includes an acid aqueous solution storage tank 21a for storing the third acid aqueous solution, a seventh pipe 21b connected at one end to the downstream side of the tank 11 (position corresponding to fourth chamber S4) and connected at the other end to the acid aqueous solution storage tank 21a, an eighth pipe 21c connected at one end to the acid aqueous solution storage tank 21a and connected at the other end to the upstream side of the tank 11, and a pump 21d disposed on the eighth pipe 21c. When the pump 21d is operated, the third acid aqueous solution is fed into the fourth chamber S4.

During operation of the pump 21d, the first acid aqueous solution circulates in the direction of arrow in FIG 2, i.e., through the acid aqueous solution storage tank 21a, the eighth pipe 21c, the fourth chamber S4, and the seventh pipe 21b in this order.

Examples of the acid in the third acid aqueous solution include nitric acid, sulfuric acid, and hydrochloric acid. The acid concentration of the third acid aqueous solution may be, for example, 1 to 50% by mass. The pH of the third acid aqueous solution may be, for example, 6 or less at 25°C.

The acidic treatment liquid processing apparatus 30 includes an acid aqueous solution supply part 35 capable of additionally supplying the acid aqueous solution to a circulation passage 25 (acid aqueous solution storage tank 21a, eighth pipe 21c, fourth chamber S4, seventh pipe 2b) in which the third acid aqueous solution circulates, and a discharge part 36 capable of discharging the acid aqueous solution from the circulation passage 25.

The acid aqueous solution supply part 35 includes an acid aqueous solution refill tank 35a as a supply source of the acid aqueous solution to the circulation passage 25, a pipe 35b connecting the downstream side of the acid aqueous solution refill tank 35a and the upstream side of the acid aqueous solution storage tank 21a, a valve 35c disposed on the pipe 35b, and a pipe 35d connecting the downstream side of the acid aqueous solution storage tank 21a and the upstream side of the acid aqueous solution refill tank 35a. The acid aqueous solution is additionally supplied by opening the valve 35c.

Thus, the acid aqueous solution can be additionally supplied to the third acid aqueous solution in the fourth chamber S4 from the outside by the acid aqueous solution supply part 35. Accordingly, even if the acid concentration in the acid aqueous solution in the fourth chamber S4 decreases with the progress of the processing reaction in the tank 11, and the processing performance deteriorates, by additionally supplying the acid aqueous solution from the outside, the acid concentration can be increased to recover or maintain the processing performance. As a result, it is possible to reduce the consumption of the third acid aqueous solution in the circulation passage 25 and reduce the frequency of replacement. Thus, it is possible to reduce the cost. Further, when the acid concentration in the acid aqueous solution decreases, the voltage between the first electrode 12 and the second electrode 13 increases, but the voltage between the first electrode 12 and the second electrode 13 can also be reduced by additionally supplying the acid aqueous solution to increase the acid concentration as described above. This reduces the power consumption of the power supply 14, thus being effective in reducing the power cost.

Additionally, in the third embodiment, the acid concentration of the third acid aqueous solution in the fourth chamber S4 is detected by the acid concentration detection part 38. The acid concentration detected by the acid concentration detection part 38 is sent as an electrical signal to a supply control part 37. The supply control part 37 is, for example, a control unit composed of an electronic computing device such as a computer, and controls the acid aqueous solution supply part 35 (opening degree of valve 35c) to adjust the additional supply amount of the acid aqueous solution such that the acid concentration detected by the acid concentration detection part 38 is within a predetermined acid concentration range. As a result, the acid concentration of the third acid aqueous solution circulating in the fourth chamber S4 is maintained in the predetermined acid concentration range, so that it is possible to maintain a suitable processing performance for a long time.

Additionally, in the third embodiment, the acid aqueous solution circulating in the circulation passage 25 can be discharged to the outside by the discharge part 36. The discharge part 36 includes a discharge line 36b communicating with a discharge port 36a. The discharge line 36b is configured such that the third acid aqueous solution in the circulation passage 25 can be discharged through the discharge port 36a when the pipe 35d is caused to communicate with the discharge line 36b by a three-way valve 36d disposed at a junction between the discharge line 36b and the pipe 35d. Thus, even if the volume of the acid aqueous solution circulating in the circulation passage 25 is increased by supplying the acid aqueous solution from the outside to the circulation passage 25 by the acid aqueous solution supply part 35, the volume of the acid aqueous solution circulating in the circulation passage 25 can be appropriately adjusted by discharging at least a part of the solution to the outside.

The operation of discharging the acid aqueous solution by the discharge part 36 may be performed manually by the operator, or may be performed by automatic control. In the latter case, for example, the volume of the acid aqueous solution flowing through the circulation passage 25 may be monitored, and control may be performed so that the discharge operation is performed when the volume exceeds a predetermined volume.

In the third embodiment, as described above, the acid aqueous solution supply part 35 additionally supplies the acid aqueous solution to the circulation passage 25, or the discharge part 36 discharges the acid aqueous solution from the circulation passage 25. However, when sulfuric acid is used as acid in the acid aqueous solution, these configurations may be omitted. Sulfuric acid is hardly consumed by the reduction reaction at the second electrode 13, which is the cathode. Therefore, it is less consumed than an acid aqueous solution such as nitric acid, which is consumed by the reduction reaction at the second electrode 13, so that it is possible to maintain a stable processing performance for a long time even if the acid aqueous solution is not additionally supplied or discharged as described above.

As described above, at least one embodiment of the present invention provides an acidic treatment liquid processing apparatus and an acidic treatment liquid processing method whereby it is possible to prolong the life and reduce the cost by suppressing the deterioration of the electrodes, and improve the quality of the processed acidic treatment liquid.

### Industrial Applicability

At least one embodiment of the present invention can be applied to an acidic treatment liquid processing apparatus and an acidic treatment liquid processing method for processing an acidic treatment liquid containing a dichromate ion and a metal cation.

### Reference Signs List

- 10: Acidic treatment liquid processing apparatus
- 11: Tank
- 12: First electrode
- 13: Second electrode
- 14: Power supply
- 15: First diaphragm
- 16: Second diaphragm
- 17: First liquid passing part
- 18: Second liquid passing part
- 19: Third liquid passing part
- 20: Acidic treatment liquid processing apparatus
- 21: Fourth liquid passing part
- 23: Third diaphragm
- 25: Circulation passage
- 30: Acidic treatment liquid processing apparatus
- 35: Acid aqueous solution supply part
- 36: Discharge part
- 37: Supply control part

## Claims

1. An acidic treatment liquid processing apparatus, comprising:
a tank having an interior space;
a first electrode and a second electrode disposed in the space so as to be spaced from each other;
a power supply configured to apply a voltage while using the first electrode as an anode and the second electrode as a cathode;
a first diaphragm permeable to a metal cation and separating a first chamber disposed between the first electrode and the second electrode from a second chamber disposed on a second electrode side of the first chamber in the space;
a second diaphragm separating the first chamber from a third chamber disposed on a first electrode side of the first chamber in the space;
a first liquid passing part configured to pass an acidic treatment liquid containing a dichromate ion and a metal cation into the first chamber;
a second liquid passing part configured to pass a first acid aqueous solution into the second chamber; and
a third liquid passing part configured to pass a second acid aqueous solution into the third chamber.

2. The acidic treatment liquid processing apparatus according to claim 1, further comprising:
a third diaphragm impermeable to a metal cation and separating the second chamber from a fourth chamber disposed on a second electrode side of the second chamber; and
a fourth liquid passing part configured to pass a third acid aqueous solution into the fourth chamber.

3. The acidic treatment liquid processing apparatus according to claim 1 or 2,
wherein a plurality of processing units each of which includes the first chamber and the second chamber adjacent to each other via the first diaphragm are disposed between the first electrode and the second electrode with the second diaphragm being interposed between the processing units.

4. The acidic treatment liquid processing apparatus according to any one of claims 1 to 3,
wherein the first diaphragm includes a cation exchange membrane.

5. The acidic treatment liquid processing apparatus according to claim 4,
wherein the cation exchange membrane is a cation permselective membrane.

6. The acidic treatment liquid processing apparatus according to any one of claims 1 to 5,
wherein the second diaphragm includes a bipolar membrane or a monovalent cation permselective membrane.

7. The acidic treatment liquid processing apparatus according to claim 6,
wherein the bipolar membrane includes an anion exchange layer facing the first electrode and a cation exchange layer facing the second electrode.

8. The acidic treatment liquid processing apparatus according to claim 2, comprising:
an acid concentration detection part configured to detect an acid concentration of the fourth chamber; and
an acid aqueous solution supply part configured to additionally supply an acid aqueous solution to the fourth chamber, based on a detection result of the acid concentration detection part.

9. The acidic treatment liquid processing apparatus according to claim 2,
wherein the third acid aqueous solution is sulfuric acid.

10. An acidic treatment liquid processing method, comprising:
separating a space between a first electrode and a second electrode spaced from each other by a first diaphragm permeable to a metal cation into a first chamber and a second chamber disposed on a second electrode side of the first chamber, and separating the first chamber by a second diaphragm from a third chamber disposed on a first electrode side of the first chamber;
passing an acidic treatment liquid containing a dichromate ion and a metal cation into the first chamber;
passing a first acid aqueous solution into the second chamber;
passing a second acid aqueous solution into the third chamber; and
applying a voltage while using the first electrode as an anode and the second electrode as a cathode,
wherein the first diaphragm is permeable to a metal cation.

11. The acidic treatment liquid processing method according to claim 10, further comprising:
separating the space by a third diaphragm into the second chamber and a fourth chamber disposed on a second electrode side of the second chamber; and
passing a third acid aqueous solution into the fourth chamber.

12. The acidic treatment liquid processing method according to claim 11, further comprising:
detecting an acid concentration of the fourth chamber; and
additionally supplying an acid aqueous solution to the fourth chamber, based on a detection result of the acid concentration.
